Europäisches Patentamt

European Patent Office

Office européen des brevets

(19)

(11) Publication number: **0 004 372**
**B1**

(12) **EUROPEAN PATENT SPECIFICATION**

(45) Date of publication of patent specification: **15.02.84**

(51) Int. Cl.³: **C 08 L 97/02**

(21) Application number: **79100842.8**

(22) Date of filing: **20.03.79**

(54) Flame-retardant moulded articles comprising mineral-clad ligneous particles.

(30) Priority: **20.03.78 CA 299288**

(43) Date of publication of application:
**03.10.79 Bulletin 79/20**

(45) Publication of the grant of the patent:
**15.02.84 Bulletin 84/7**

(84) Designated Contracting States:
**BE CH DE FR GB IT LU NL SE**

(56) References cited:
**CA - A - 972 227**
**DE - A - 2 524 699**
**US - A - 2 465 645**

(73) Proprietor: **Bau- und Forschungsgesellschaft Thermoform A.G.**
**Ryfstrasse 50**
**Murten/ Fribourg (CH)**

(72) Inventor: **Paszner, Laszlo, Prof. Dr.**
**3906 West 33 rd Avenue**
**Vancouver, Britsh Columbia (CA)**

(74) Representative: **Hansmann, Axel, Dipl.-Wirtschafts-Ing.**
**Patentanwälte HANSMANN & VOGESER Albert-Rosshaupter-Strasse 65**
**D-8000 München 70 (DE)**

The file contains technical information submitted after the application was filed and not included in this specification

Courier Press, Leamington Spa, England.

# Flame-retardant moulded articles comprising mineral-clad ligneous particles

The invention relates to a method of making a high strength molded structural body having flame retardant properties and comprising a mineral mass integrally adhered to particles of a lignocellulose material imbedded therein, and to the structural body obtained by said process.

US patents 2,175,568 and 2,837,435, and British patent 1,089,777 disclose processes of making light weight concreted products containing as a filler particles of lignocellulose material. They use different cement compositions, and all three of them point to the fact that articles made by cementing lignocellulose particles have poor strength properties due to the presence in the lignocellulose material of certain substances, such as resins, gums, waxes, fats and wood sugars, which migrate from the particles into the cement and exert detrimental effects on its setting and hardening properties. As a means to overcome this problem these patents disclose a pretreatment of the lignocellulose material with an aqueous solution of alkali metal hydroxide, washing the treated material and drying it.

It is also well known to use ammonium, alkali metal, aluminium and chromium orthophosphates, pyrophosphates or polyphosphates together with magnesium oxide and non-reactive or only weakly reactive extenders or fillers in mineral cement compositions. Thus US patent 3,525,632 discloses a rapid setting mineral cement containing phosphor acids and phosphates as well as magnesium oxide and extenders. Somewhat similar compositions and their use for repairing furnace walls and furnace linings are described in US patents 3,278,320; 3,285,758; 3,413,385 and 3,475,188; and US patents 3,821,006 and 3,879,209 describe such compositions and their use as patching compositions for repairing rotten mortar, concrete, wood, ceramic, plaster and the like, e.g. crackings in roadways or a section of a concrete highway.

The problem to be solved by the invention is to provide a high strength, flame retardant molded structural body containing lignocellulose fragments as filler material, and a method of making such a shaped structural body which can easily be varied so that the densities of the obtained bodies and their porosities vary within a wide range.

A high strength, flame retardant molded structural body of the invention comprises a mineral mass integrally adhered to particles of a lignocellulose material imbedded therein and is characterized in that it is derived from a mixture of particulate lignocellulose material, an aqueous ammonium polyphosphate solution, and dead burnt magnesium oxide as well as calcium oxide and/or carbonate and/or magnesium carbonate and mineral extender particles.

The method of the invention of making a high strength molded structural body having flame retardant properties and comprising a mineral mass integrally adhered to particles of a lignocellulose material imbedded therein, comprises

a) mixing the lignocellulose particles with an aqueous ammonium polyphosphate solution or with powdered ammonium polyphosphate salt and water in an amount of from 0.26 to 1.8 parts by weight of $P_2O_5$ per part by weight of the lignocellulose particles and with mineral cement solids comprising a mixture of dead burnt magnesium oxide as well as calcium oxide and/or carbonate and/or magnesium carbonate and mineral extender particles, said mineral cement solids being present in an amount of from 0.93 to 5 times the weight of the lignocellulose material and containing between 0.05 to 3.0 parts by weight of dead burnt magnesium oxide per part by weight of the lignocellulose particles,

b) molding the mixture into a shaped body, and

c) curing the shaped body between 10°C and 50°C.

According to a preferred embodiment of the invention the mineral cement solids are derived from dead burnt magnesite and ground dolomite used in a weight ratio from 1:3 to 1:59.

The molding may be carried out at atmospheric pressure or with a compaction pressure, e.g. up to $11.8 \times 10^5$ Pa. Closed surface tiles, tubes and the like can be made by spin-casting. Light weight structural bodies having densities as low as 340 kg/m³ may be obtained.

Upon mixing the lignocellulose particles with the ammonium polyphosphate solution or ammonium polyphosphate and water, and extender particles the dead burnt magnesium oxide reacts with the ammonium polyphosphate to form a gel which extends to within the pores and fissures of the lignocellulose particles, and this gel rapidly sets to a rigid, stone-like solid strongly adhering to the lignocellulose fragments and bonding them to each other. The bonding strength is not weakened by any substances migrating from the lignocellulose particles into the mineral bonding mass.

A wide range of lignocellulose materials can be used in the process of the invention, such as fibres, stalks, stems, boles and branches of woody plants and forest and crop residues, obtained by breaking or cutting; and a wide variety of structural bodies, such as panels, sheets, boards, posts, beams, slabs, tiles and tubes can be made by the process.

The reaction of the dead burnt magnesium oxide with the ammonium polyphosphate solution is highly exothermic and liberates water and ammonia. A peak temperature of from 50 to 65°C is attained even if small amounts of dead burnt MgO are reacted with an excess of ammonium polyphosphate solution within 10 to 20 minutes of mixing. At the higher temperatures also magnesium and calcium carbonates present in the mineral binder material react with the ammonium polyphosphate solution, so that carbon dioxide is liberated. Thereby the product attains a porous structure if left to set undisturbed. The reaction becomes irreversible once the gel point has been surpassed, and cannot be stopped, even if the reactants are exposed to large excesses of water, which may be sea water. Upon hardening of the gel the reaction products attain 50 to 75% of their ultimate strength. Maximum compression strength is reached at a moisture content of 8 to 10% and after most of the ammonia has escaped.

In the process of the invention a liquid ammonium polyphosphate consisting of 65 to 85% of $P_2O_5$ combined as polyphosphates, and 25 to 30% as orthophosphates, or by different ammoniation a salt product having $P_2O_5$ content about equally divided between ortho- and polyphosphate salts may be used.

The magnesium oxide is dead burnt dense grain magnesite or dead burnt magnesia rather than merely calcined magnesite. The used mineral cement solids contain in addition to the highly reactive dead burnt magnesium oxide less reactive components, such as calcium oxide and/or magnesium carbonate and/or calcium carbonate and inert extender components, such as silica, zirconia, alumina, alkaline earth metal phosphates and silicates and mixtures thereof.

Example I

To determine the tolerance of the mineral binder used according to the invention to water-soluble plant constituents, such as sugars, polyphenolics and gums, a series of 3 cm diameter by 8 cm high plugs were cast using constant proportions of cement solids (75% by weight) of polyphosphate solution (25% by weight) and varying the weight percentage of sugar from zero to 5%, expressed as percentage of the combined weights of solution and cement solids. The cement solids were of grain sizes between 74 and 149 $\mu$m. The cement comprises 25% by weight of dead burnt magnesia of density 3.26 and 75% by weight of ground raw dolomite of density 2.62 analysing 45.1% by weight of $MgCO_3$, the balance being chiefly silica and $CaCO_3$. All plugs were cast without compaction and removed from the cylindrical molds within 15 minutes in hardened condition and allowed to dry for 7 days before compression testing. The mineral binder was observed to harden equally well when in contact with a pitch pocket of sitka spruce veneers in other tests, with an adhesion strength such that on breaking the binder away, pitch remained adhered to the mineral.

TABLE I
Compression strength

| Test no. | Dextrose % | Crushing strength $10^5$ Pa | MOE $10^5$ Pa |
|---|---|---|---|
| 1 | nil | 250 | 277,634 |
| 2 | 1 | 236 | 226,478 |
| 3 | 2 | 278 | 213,052 |
| 4 | 3 | 198 | 200,998 |
| 5 | 4 | 236 | 161,500 |

The consistent decrease of Modulus of Elasticity (MOE) with increasing sugar content is inferred to result from the crystal volume of sugar distributed in the mineral binder.

Example II

Screened spruce wood fragments, particle size 0.8 to 1.7 mm, having 8.3% moisture content in air-dry condition were treated with varying amounts of ammonium polyphosphate of 1.4 specific gravity of analysis NPK 10:34:00 (NPK=weight ratio of $NH_4$:$P_2O_5$:K). Each sample was coated with a constant weight of cement solids of grain size <149 $\mu$m consisting of ground dolomite and dead burnt magnesite in quantity equalling 3 times the weight of the wood fragments. No compaction pressure was applied in making plugs of 7.7 cm length having 3.03 cm diameter. Compression testing to failure was carried out just 30 min after casting the plugs. The results are given in Table II.

TABLE II
Parts by weight

| Test | Wood | Ground dolomite | Dead burnt MgO | Solution | $P_2O_5$ | Product density g/cm³ | Compr. strength 10⁵Pa |
|---|---|---|---|---|---|---|---|
| 1 | 1 | 2.25 | 0.75 | 1.50 | 0.57 | 0.82 | 17.5 |
| 2 | 1 | 2.25 | 0.75 | 2.10 | 0.80 | 0.86 | 25.9 |
| 3 | 1 | 2.25 | 0.75 | 2.70 | 1.03 | 0.93 | 26.2 |
| 4 | 1 | — | 3.00 | 1.50 | 0.57 | 0.82 | 12.4 |
| 5 | 1 | — | 3.00 | 2.10 | 0.80 | 0.86 | 19.6 |
| 6 | 1 | — | 3.00 | 2.70 | 1.03 | 0.93 | 26.3 |
| 7 | 1 | 2.95 | 0.05 | 1.50 | 0.57 | 0.82 | 14.8 |
| 8 | 1 | 2.95 | 0.05 | 2.10 | 0.80 | 0.86 | 17.5 |
| 9 | 1 | 2.95 | 0.05 | 2.70 | 1.03 | 0.93 | 18.4 |

Example III

The compression strength values in Table III for plugs, cast as described in the previous example, are given for a wide variety of ligneous fragments to indicate the wide range of applicability of this bonding technology. The wood fragments, particle size 0.8 to 1.7 mm, were dried to 8.3% moisture content and treated with weighed proportions of ammonium polyphosphate solution of 10:34:00 analysis and uniform cement weights consisting of 75% dolomite and 25% MgO (dead burnt). The wood:cement ratio was 1:3 and the wood:$P_2O_5$ ratio was 1:0.8. The compaction pressure in the mold was $0.98 \times 10^5$Pa and compression testing followed 30 min, after 15 min heating at 105°C and 7 days at 20°C following the initial mixing. Variations in the early strength are reflecting the intrinsic particle strengths rather than interference of some wood constituents with the bonding process as noted in the prior art with Portland cement and other magnesite cements. Samples of the same wood species having different product densities were made with $0.98 \times 10^5$ Pa, $1.96 \times 10^5$ Pa and $9.8 \times 10^5$ Pa compaction pressures at the time of casting.

TABLE III

| | | | Compressive strength, 10⁵ Pa | | |
|---|---|---|---|---|---|
| | | | | Curing mode | |
| Test | Lignocellulosic species | Density kg/m³ | 30 min | 15 min 105°C | 7 days 20°C |
|---|---|---|---|---|---|
| 1 | Spruce | 870 | 22.7 | 25.9 | 56.2 |
| 2 | Spruce | 1070 | 23.0 | 34.3 | 92.2 |
| 3 | Spruce | 1300 | 28.0 | 45.7 | 112.4 |
| 4 | Spruce Excelsior | 450 | — | — | 14.8 |
| 5 | W. Red Cedar | 500 | 11.6 | 16.5 | 19.7 |
| 6 | W. Red Cedar | 770 | 16.6 | 22.7 | 44.0 |
| 7 | W. Red Cedar | 960 | 25.0 | 32.5 | 47.8 |
| 8 | W. Larch | 890 | 22.2 | — | 57.9 |
| 9 | Black Locust | 1090 | 25.2 | 43.0 | 91.3 |
| 10 | Keruing | 1230 | 32.3 | 47.8 | 90.6 |
| 11 | Beech | 1030 | 20.2 | 44.0 | 63.4 |
| 12 | Hemlock Driftw. | 860 | 20.8 | — | — |
| 13 | Hem Bal Fir (Wet) | 860 | 14.4 | — | 35.9 |
| 14 | Bark, Douglas-f. | 750 | 16.8 | — | 23.1 |
| 15 | Cottonwood | 580 | 17.6 | 18.8 | 27.9 |
| 16 | Rice husks | 970 | — | 18.8 | — |
| 17 | Bagasse | 890 | 16.9 | — | 24.8 |

Example IV

A series of samples using air-dried spruce fragments, in the form of slivers of a range of lengths approximately 0.5 cm to 3 cm, was mixed with ammonium polyphosphate solution and cement solids of the same composition used in the previous example, by keeping the proportion of solution to cement solids constant as follows:

TABLE IV

| | | Parts by weight | | | Density kg/m³ | Compression strength, 10⁵ Pa | |
| Test | Wood | Cement | Solution | $P_2O_5$ | | Curing mode | |
| | | | | | | 15 min 105°C | 7 days 20°C |
|---|---|---|---|---|---|---|---|
| 1 | 1 | 2.0 | 1.4 | 0.53 | 650 | 8.0 | 28.6 |
| 2 | 1 | 3.0 | 2.1 | 0.80 | 870 | 25.0 | 56.2 |
| 3 | 1 | 4.0 | 2.80 | 1.06 | 1020 | 28.4 | 50.9 |
| 4 | 1 | 5.0 | 3.50 | 1.33 | 1020 | 43.0 | 120.1 |

The samples were formed with a low compaction pressure of about $0.49 \times 10^5$ Pa and the density variation being primarily due to the variation of cement solids used. Tests No. 1 and 2 show that high quality low density products are realisable with relatively low reactant costs.

Example V

Board products of various fragment types, ligneous species and technical description were prepared in molds as described in Table V. The weighed fragment masses were treated first with predetermined amounts of ammonium polyphosphate of 10:34:00 NPK analysis and allowed to soak until all of the solution was absorbed in the fragments. The wet fragments were then dusted with the weighed amount of cement dust of predetermined composition and the mass poured into a mold having polished stainless steel surfaces. The molds were placed into a cold press and the mass compressed to a predetermined nominal thickness and held under pressure for 5 minutes. The hardened boards were removed from the molds and air-dried in a forced air cabinet at room temperature for 7 days. The bending specimens measured 6.5 cm by 25 cm supported on a 15 cm span.

The cement filler was raw dolomite, particle size <149 $\mu$m, and the ammonium polyphosphate was either wet process green or black acid. The MgO was either dead burnt or USP heavy powder of 3.54 specific gravity as noted in the Table.

The ratio by weight of wood:cement:$P_2O_5$ was 1:2.5:0.57 in test 1—5 and 7—10; 1:2.9:0.50 in test 6; and 1:3:0.38 in test 11.

"Hog-Fuel" as used in the Table refers to mainly sawmill and plywood mill residues which are subsequently exposed to the action of hammer mill in order to reduce the particle size to small fragments of not larger than 10 cm in length, typically 5 cm, and cross sections of 2 to 5 mm by 2 to 5 mm containing material smaller in size.

TABLE V

| Fragment type | kg wood cement polyphosphate soln. | Nominal thickness cm | Density kg/m$^3$ | Modulus of rupture 10$^5$ Pa | Modulus of Elasticity 10$^5$ Pa | Description/composition/ treatment |
|---|---|---|---|---|---|---|
| 1. Western Red Cedar Hog-Fuel, 50% bark | 155 385 232 | 1.9 | 655 | 21.0 | 12,044 | Fragments: air dry, ApPh: Green acid, cement solids: 75% Dolomite, 25% DB MgO |
| 2. Western Red Cedar Hog-Fuel, 50% bark | 155 385 232 | 1.9 | 640 | 7.2 | 9,780 | Fragments: wet, 50% moisture ApPh: Green acid; cement solids: 75% Dolomite, 25% DB MgO |
| 3. Western Red Cedar Hog-Fuel, 50% bark | 155 385 232 | 1.9 | 655 | 20.2 | 11,760 | Fragments: air dry, ApPh: black acid, cement solids: 75% Dolomite, 25% DB MgO |
| 4. Western Red Cedar Hog-Fuel, 50% bark | 155 385 232 | 1.9 | 655 | 17.8 | 10,388 | Fragments: air-dry, ApPh: green acid, cement solids: 98% Dolomite, 2% USP MgO heavy powder |
| 5. Western Red Cedar Hog-Fuel, 50% Bark | 155 385 232 | 1.9 | 655 | 20.5 | 12,090 | Fragments: air-dry, ApPh: green acid, cement solids: 95% Dolomite, 5% USP MgO |
| 6. Alcer, wafers | 180 520 240 | 1.9 | 870 | 36.2 | 17,150 | Fragments: air-dry, ApPh: green acid, cement solids: 75% Dolomite, 25% DB MgO |

TABLE V Continued

| Fragment type | kg wood cement polyphosphate soln. | Nominal thickness cm | Density kg/m$^3$ | Modulus of rupture 10$^5$ Pa | Modulus of elasticity 10$^5$ Pa | Description/composition/ treatment |
|---|---|---|---|---|---|---|
| 7. Cottonwood Excelsior | 155 385 232 | 2.54 | 620 | 9.3 | 3,332 | Fragments: air-dry, ApPh: green acid, cement solids: 75% Dolomite, 25% DB MgO |
| 8. Red Cedar planer shavings | 155 385 232 | 1.9 | 755 | 15.5 | 8,546 | Fragments, wet, 50% Moisture, ApPh: black acid, cement solids: 75% Dolomite, 25% DB MgO |
| 9. Hem Bal Fir pulp chips | 155 385 232 | 2.54 | 655 | 9.4 | 6,017 | Fragments: air-dry, ApPh: green acid, cement solids: 75% Dolomite, 25% DB MgO |
| 10. Sandwich panel | 155 385 232 | 2.54 | (655) | 68.6 | 17,944 | Fragments: core as 1. above faces: 3mm Spruce veneer |
| 11. Aspenite wafers | 185 555 183 | 1.9 | 850 | 18.1 | 11,270 | Fragments: oven-dried, ApPh: green acid, cement solids: 75% Dolomite, 25% DB MgO |

0 004 372

Example VI

A series of boards was made using oriented ligneous fragments derived from sugar cane rind, this being the external fibrous stalk portion lying radially inwardly of a hard waxy and silicaceous skin layer, having thickness ranging from about 1.3 to 2.8 mm. The inside pith and outside waxy layers were removed by mechanical action and the strands having cross sectional area of 1.5 to 5 mm and thickness of 1.0 to 2.0 mm and length was chopped to 15 to 20 cm mechanically.

Known weights of the strands were treated with various proportions of ammonium polyphosphate (black acid type) and cement solids consisting of 0.75 parts of dead burnt MgO of high density and activity and 2.25 parts of ground dolomite analysing 45.1% $MgCO_3$ with the rest being chiefly silica and $CaCO_3$. All cement solids were of particle size <149 $\mu$m. Compaction pressures at the time of molding were $0.49 \times 10^5$ Pa, $0.69 \times 10^5$ Pa and $7.45 \times 10^5$ Pa and nominal board thickness was set at 2.12 and 1.19 cm, respectively. The corresponding modulus of rupture (MOR) and MOE values are recorded in Table VI. The boards were stored for 7 days before testing. The bending specimen size was that described in the previous example.

TABLE VI

| | Parts by weight | | | | Compact. pressure $10^5$ Pa | Bulk Dens. g/cm$^3$ | MOR $10^5$ Pa | MOE $10^5$ Pa | Thickness cm |
|---|---|---|---|---|---|---|---|---|---|
| Board | Strand | Cement solids | Poly-phos. | $P_2O_5$ | | | | | |
| 1 | 1.0 | 3.0 | 1.80 | 0.68 | 0.49 | 0.34 | 10.2 | 11,074 | 3.17 |
| 2 | 1.0 | 3.0 | 1.80 | 0.68 | 0.69 | 0.53 | 37.0 | 34,398 | 2.12 |
| 3 | 1.0 | 3.0 | 1.80 | 0.68 | 7.45 | 0.93 | 166.1 | 63,798 | 1.19 |
| 4 | 1.0 | 2.50 | 1.50 | 0.57 | 11.8 | 1.05 | 147.7 | 55,174 | 1.90 |
| 5 | 1.0 | 2.50 | 1.25 | 0.48 | 4.4 | 0.75 | 29.5 | 17,346 | 2.74 |
| 6 | 1.0 | 2.00 | 1.20 | 0.46 | 11.4 | 1.07 | 173.6 | 61,103 | 1.67 |
| 7 | 1.0 | 1.00 | 1.30 | 0.49 | 11.4 | 0.79 | 139.1 | 40,278 | 0.75 |
| 8 | 1.0 | 0.93 | 1.10 | 0.42 | 4.4 | 0.34 | 32.0 | 30,674 | 1.72 |

Example VII

Fire-retardant low density structural board products were made from sugarcane residue, i.e., bagasse resulting from mechanical expression of cane juices by passing the stalks which have been stripped of leaves through crushing rollers, and water rinsing. The pressed stalks were subsequently hammermilled into random particles comprising the rind fibre structure, pith and all other components of the plant found with the rind, i.e. waxes and silicaceous deposits normally present.

The hammermilled fragments had particles ranging to 8 cm in length with thickness between 1 to 4 mm. Dust and fine fragments smaller than 0.83 mm in size were removed by screening. The specific gravity of the bagasse was estimated at 0.21 and the surface area was determined at 19.000 cm$^2$ per 100 g of air-dry fragments.

A test quantity of 200 g of the air-dry fragments was treated with 360 g of commercial fertilizer grade ammonium polyphosphate solution of specific gravity 1.4 and analysis of 10:34:00 NPK corresponding wood: $P_2O_5$=1:0.68.

A cement solids mixture of 150 g of dead burnt magnesia and 450 g of powdered dolomite particle size <149 $\mu$m was sifted onto the polyphosphate wetted fragments and tumble mixed for 22 sec. The quantity of MgO grain as judged from its measured density of 3.36 was inferred to furnish 11.5% or 17.3 g dead burnt MgO as oxyphosphate, accordingly 132.7 g serving only as dense inert support filler. On a similar basis the dolomite was inferred to contribute 10.5 g MgO to the reaction, the remainder being inert filler (428 g).

The bagasse cement mixture was immediately dumped into a flanged board mold measuring 15 cm by 30 cm, levelled, and compacted by a pressure plate with $7.35 \times 10^5$ Pa. Thickness was held at 2.53 cm. The pressure was released after 12 min and the board was air-dried for five days before testing. The temperature of the board at the time of stripping from the mold was 54°C. The resulting board product had a cured volume of 1017 cm$^3$ and weighed 998 g, indicating a bulk density of 0.98. The MOR and MOE values obtained in static bending were 78.0 and $17.55 \times 10^5$ Pa, respectively.

A computation of the residual ammonium polyphosphate (neglecting the ammonium carbonate formed from dolomite) solution remaining as dried salt crystallized within the pores of the bagasse indicates that an amount in excess of that needed to meet Class A fire rating for lignocellulosics was held in the fragments. Accordingly, the product was tested for flammability by exposing it to direct flame of 800°C temperature over an area of 4.5 cm by 4.5 cm for 15 min. At the end of that time only minor surface scorching was evident without flaming. Minor gas evolution and steaming was evident initially as the flameside became red hot while the opposite side was only slightly warm at 40°C. In a second test the flame temperature was increased to 1200 to 1400°C whereby the impinged surface area became glowing hot in about 30 seconds and the material mass was gradually ablated by developing a crater. At 3.5 min the opposite surface began to glow and at 5 min the 2.52 cm board burned through to the other side.

Example VIII

Ammonium polyphosphate in solid form such as TVA's 11:55:00 or 12:54:00 is also useful as impregnating salt and in one step admixing of calcium and magnesium compounds with fragments, salt and water to effect their bonding.

In a first trial 69 g of 11:55:00 salt were added to 215 g of air-dry red alder wood flakes of 1.3 mm thickness and width and length dimensions of 2 cm by 6 cm, respectively (ratio of wood: $P_2O_5=1:=0.26$).

To the mixture further 250 g of particulate cement solids comprised of 25 parts of dead burnt magnesite and 75 parts of ground dolomite, particle size $<149$ $\mu$m, were added. Following a thorough mixing of the dry solids 100 g of water was sprayed onto the mix with continued tumbling and 30 sec later the batch was turned out into a mold, levelled and compacted under $2.94\times10^5$ Pa pressure for 10 min, then released and air-dried for 7 days before testing. Board thickness was controlled at 1.9 cm resulting in a density of 0.54 g/cm$^3$. The MOR and MOE values were 18.2 and $10,000\times10^5$ Pa, respectively.

In a second attempt to use solid ammonium polyphosphate the salt was dissolved in the water first and the ensuing solution added to the flakes. The electrolyte-wet flakes were dusted with the same amount of cement solids as in the previous example and cast into a board of the same dimensions. After conditioning for 7 days the samples had a density of 0.54 g/cm$^3$, MOR 19.6 and MOE $11.8\times10^5$ Pa, respectively. A sample made with liquid 10:34:00 ammonium polyphoshate of the same thickness had a density 0.87 g/cm$^3$ MOR $36.1\times10^5$ Pa and MOE $17,200\times10^5$ Pa indicating that solid ammonium polyphosphate would be a suitable substitute for the liquid salt.

Example IX

To test the durability of composite material casts using wood fragments coated with magnesium oxyphosphate in which powdered silica sand was used as inert filler two sets of samples were prepared having average thickness of 2.12 cm and density of 0.55.

One set was tested in air-dry condition following 7 day curing at room temperature. The MOR of the samples was $25.2\times10^5$ Pa and the corresponding MOE was determined as $12,220\times10^5$ Pa.

The second set of samples was alternately immersed in tap and sea water with air-drying between the soakings. A total of 7 such cycles were performed and the resulting samples finally tested in bending in air-dry condition. The reduction in MOR was 7% and the weight loss recorded was 3% for the weathered portion.

The relatively high bonding rates possible with the present invention make continuous casting of mineral bonded wood products of high strength and light weight having hollow circular or rectangular shapes such as used for drainage tiles, culverts and longer pipe sections possible. Usefulness of this invention for such applications becomes especially evident as porosity and permeability to fluids is made technically possible by selecting manufacturing conditions under which such light weight tubes can be fabricated. On the other hand, by selecting conditions under which migration of colloids to product surfaces is promoted, as in processes of spin casting, closed surfaces tiles and tubes can be made. Similarly, for poles where high bending strength and light weight might be important assets, the continuous molding process may include low RPM spinning of the mold during or after the casting to cause simultaneous densification of the wood cement mixture and set up colloid migration to the surface on account of the centrifugal force created thereby. By variation of this technology a large variety of molded products can be formed.

**Claims**

1. A method of making a high strength molded structural body having flame retardant properties and comprising a mineral mass integrally adhered to particles of a lignocellulose material imbedded therein, characterized in that

a) the lignocellulose particles are mixed with an aqueous ammonium polyphosphate solution or with powdered ammonium polyphosphate salt and water in an amount of from 0.26 to 1.8 parts by weight of $P_2O_5$ per part by weight of the lignocellulose particles and with mineral cement solids comprising a mixture of dead burnt magnesium oxide as well as calcium oxide and/or carbonate and/or magnesium carbonate and/or mineral extender particles, said mineral cement solids being present in an amount of from 0.93 to 5 times the weight of the lignocellulose material and containing between 0.05 to 3.0 parts by weight of dead burnt magnesium oxide per part by weight of the lignocellulose particles,

b) the mixture is molded into a shaped body, and

c) the shaped body is cured between 10°C and 50°C.

2. A method according to claim 1, characterized in that the mineral cement solids are derived from dead burnt magnesite and ground dolomite used in a weight ratio of from 1:3 to 1:59.

9

3. A method according to claim 1, characterized in that the molding is carried out under a pressure of from atmospheric pressure to a compaction pressure up to 11.8×10⁵ Pa.

4. A method according to claim 3, characterized in that the molding is effected by spin-casting.

5. A high strength molded structural body having flame retardant properties comprising a mineral integrally adhered to particles of a lignocellulose material imbedded therein obtained by the method of claim 1.

**Patentansprüche**

1. Verfahren zur Herstellung eines geformten Bauelements hoher mechanischer Festigkeit und Flammfestigkeit aus einer mineralischen Masse, die fest mit darin eingelagerten Teilchen eines Lignocellulosematerials verbunden ist, dadurch gekennzeichnet, daß

a) die Lignocelluloseteilchen mit einer wäßrigen Ammoniumpolyphosphatlösung oder mit pulverförmigem Ammoniumpolyphosphat und Wasser in einer Menge entsprechend 0,26 bis 1,8 Gewichtsteilen $P_2O_5$ je Gewichtsteil der Lignocelluloseteilchen und mit Feststoffteilchen eines mineralischen Zements aus einem Gemisch von totgebranntem Magnesiumoxid mit Calciumoxid und/oder -carbonat und/oder Magnesiumcarbonat und/oder Teilchen eines mineralischen Streckmittels vermischt wird, wobei die Teilchen des mineralischen Zements in einer Menge von dem 0,93- bis 5-fachen des Gewichtes des Lignocellulosematerials anwesend sind und zwischen 0,05 bis 3,0 Gewichtsteilen an totgebranntem Magnesiumoxid je Gewichtsteil Lignocelluloseteilchen enthalten,
b) das Gemisch zu einem Formkörper verformt wird, und
c) der Formkörper bei zwischen 10°C und 50°C gehärtet wird.

2. Verfahren nach Anspruch 1, dadurch gekennzeichnet, daß die Teilchen des mineralischen Zements von totgebranntem Magnesit und vermahlenem Dolomit im Gewichtsverhältnis 1:3 bis 1:59 erhalten sind.

3. Verfahren nach Anspruch 1, dadurch gekennzeichnet, daß die Verformung unter einem Druck von Atmosphärendruck bis zu einem Kompaktierungsdruck bis zu 11,8 . 10⁵ Pa durchgeführt wird.

4. Verfahren nach Anspruch 3, dadurch gekennzeichnet, daß die Verformung durch Schleuderguß erfolgt.

5. Geformtes Bauelement hoher mechanischer Festigkeit und Flammfestigkeit aus einem fest an darein eingebetteten Lignocelluloseteilchen haftenden mineralischen Zement, hergestellt nach dem Verfahren von Anspruch 1.

**Revendications**

1. Procédé de production d'un article moulé à grande résistance mécanique doué de propriétés ignifuges et comprenant une matière minérale s'intégrant par adhérence à des particules d'une matière' lignocellulosique qu'elle enrobe, caractérisé en ce que

a) les particules lignocellulosiques sont mélangées avec une solution aqueuse de polyphosphate d'ammonium ou avec un polyphosphate d'ammonium en poudre et de l'eau en une quantité de 0,26 à 1,8 partie en poids de $P_2O_5$ par partie en poids de particules lignocellulosiques et avec les matières solides constituant un ciment minéral comprenant un mélange d'oxyde de magnésium grillé à fond de même que d'oxyde et/ou de carbonate de calcium et/ou de carbonate de magnésium et/ou de particules d'une substance minérale servant de diluant, lesdites matières solides formant le ciment minéral étant présentes en une quantité de 0,93 à 5 fois le poids de la matière lignocellulosique et contenant entre 0,05 et 3,0 parties en poids d'oxyde de magnésium grillé à fond par partie en poids des particules lignocellulosiques,
b) le mélange est moulé en un article de forme et
c) l'article de forme est mûri entre 10 et 50°C.

2. Procédé suivant la revendication 1, caractérisé en ce que les matières solides formant le ciment minéral sont dérivées de magnésite grillée à fond et de dolomite broyée que l'on utilise dans un rapport en poids de 1:3 à 1:59.

3. Procédé suivant la revendication 1, caractérisé en ce que le moulage est effectué sous une pression allant de la pression atmosphérique à une pression de compactage atteignant 11,8×10⁵ Pa.

4. Procédé suivant la revendication 3, caractérisé en ce que le moulage est effectué par coulée centrifuge.

5. Article de construction moulé à grande résistance mécanique doué de propriétés ignifuges, comprenant une substance minérale s'intégrant par adhérence à des particules d'une matière lignocellulosique enrobée dans cette substance, obtenu par le procédé de la revendication 1.